(19) Europäisches Patentamt
European Patent Office
Office européen des brevets

(11) EP 3 898 832 B1

(12) EUROPEAN PATENT SPECIFICATION

(45) Date of publication and mention of the grant of the patent:
**08.11.2023 Bulletin 2023/45**

(21) Application number: **19818144.8**

(22) Date of filing: **17.12.2019**

(51) International Patent Classification (IPC):
***C08L 23/12*** *(2006.01)* ***C08L 23/14*** *(2006.01)*
***D01F 6/46*** *(2006.01)* ***D01D 5/32*** *(2006.01)*
***D01D 5/34*** *(2006.01)* ***D01F 8/06*** *(2006.01)*

(52) Cooperative Patent Classification (CPC):
(C-Sets available)
**C08L 23/12; C08L 23/142; D01D 5/32; D01D 5/34; D01F 6/46; D01F 8/06;** C08L 2203/12; C08L 2205/025; C08L 2205/03 (Cont.)

(86) International application number:
**PCT/EP2019/085692**

(87) International publication number:
**WO 2020/127296 (25.06.2020 Gazette 2020/26)**

(54) **POLYOLEFIN FIBRES**

POLYOLEFINFASERN

FIBRES DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2018 EP 18213976**

(43) Date of publication of application:
**27.10.2021 Bulletin 2021/43**

(73) Proprietor: **Basell Poliolefine Italia S.r.l.**
**20121 Milano (IT)**

(72) Inventors:
- **DE PALO, Roberto**
  **44122 Ferrara (IT)**
- **MUSACCHI, Gianluca**
  **44122 Ferrara (IT)**
- **LEMAIRE, Renaud**
  **1090 Brussels (BE)**
- **MARTI PORQUERES, Jaume**
  **43206 Reus (ES)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2008/017525**
**WO-A1-2009/080435**
**WO-A1-2010/069775**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/20;**
**C08L 23/12, C08L 23/20, C08L 23/20;**
**C08L 23/142, C08L 23/20**

## Description

FIELD OF THE INVENTION

The present disclosure relates to polyolefin fibres, articles produced from said fibres and a polyolefin composition for the preparation of the said fibres, comprising a propylene polymer and a butene-1 copolymer or a butene-1 polymer composition.

The articles produced from said fibres exhibit a high balance of mechanical properties, in particular high tenacity and elongation at break.

BACKGROUND OF THE INVENTION

Fibres made of blends of a propylene polymer and a butene-1 polymer are described in WO20 1 0069775, wherein the butene-1 polymer is characterized by a high flexibility, as shown by the low values of flexural modulus, which is of 60 MPa or lower.

Such fibres exhibit good softness and elastic recovery, but important tensile properties, in particular tenacity and elongation, are not improved with respect to fibres made of a propylene polymer only.

However, in textile articles, like in particular non-woven fabrics, it is desirable to obtain a high balance of tenacity and elongation.

It has now been found that such goal can be achieved by a using a specific butene-1 copolymer or a butene-1 polymer composition having, in combination, relatively high Melt Flow Rate and flexural modulus values.

SUMMARY OF THE INVENTION

Thus the present disclosure provides, in one embodiment, a polyolefin composition comprising:

A) 60-95% by weight, preferably 65-95% by weight, more preferably 65-92% by weight, of a propylene homo-polymer with an isotactic index (percentage by weight of fraction insoluble in xylene at 25°C) higher than 80, preferably between 90 and 98, or of a crystalline co-polymer of propylene with ethylene and/or one or more alpha-olefins having 4-10 carbon atoms, containing 85% by weight or more of propylene and having an isotactic index equal to or higher than 80, or a blend thereof;

B) 5-40% by weight, preferably 5-35% by weight, more preferably 8-35% by weight, of a copolymer (I) of butene-1 with one or more comonomers selected from ethylene and higher alpha-olefins, or a composition (II) of butene-1 polymers comprising at least one copolymer of butene-1 with one or more comonomers selected from ethylene and higher alpha-olefins, said copolymer (I) or composition (II) having:

- a MFRE value of from 5 to 100 g/10 min., preferably from 20 to 100 g/10 min., more preferably from 25 to 95 g/10 min., in particular from 30 to 80 g/10 min., wherein MFRE is the Melt Flow Rate, measured according to ISO 1133 at 190°C with a load of 2.16 kg (condition E);
- a copolymerized comonomer content from 4% to 15% by mole, preferably from 4% to 10% by mole or from 5% to 10% by mole, referred to the total weight of B);
- a Mw/Mn value, where Mw is the weight average molar mass and Mn is the number average molar mass, both measured by GPC, equal to or lower than 4;
- flexural modulus of 80 MPa or higher, preferably of 100 MPa or higher, more preferably of 115 MPa or higher;

wherein the amounts of A) and B) are referred to the total weight of A) + B).

The total weight of A) + B) amounts to 100%.

The fibres obtained from such polyolefin composition provide textile articles, in particular non-woven fabrics, having high values of tenacity and elongation both in the Machine Direction (MD) and Transverse Direction (TD).

Thus, the tensile properties of said articles are high in both directions, providing also a high tear and puncture resistance.

DETAILED DESCRIPTION OF THE INVENTION

The definition for fibres includes spun bond fibres and filaments (filaments being also called "continuous fibers" or "continuous strands").

As previously mentioned, the present polyolefin fibres are particularly adequate for producing non-woven fabrics for application requiring both softness and tenacity, such as disposable diapers.

The term "copolymer" as used herein refers to both polymers with two different monomer recurring units and polymers with more than two different monomer recurring units in the chain, such as terpolymers.

The above propylene polymer component (A) preferably has a value of Melt Flow Rate MFRL from 10 to 50 g/10 min., more preferably from 15 to 35 g/10 min., measured according to ISO 1133 at 230°C, 2.16 Kg (condition L). As it is known, high Melt Flow Rate values are obtained directly in polymerization or by controlled radical degradation of the polymer by adding free-radical generators, such as organic peroxides, in the spinning lines or during previous pelletizing stages of the olefin polymers.

The polymer component (A) preferably exhibits a molecular weight distribution (Mw/Mn) measured according to the method specified below, ranging from 2 to 8.

In particular, when the polymer component (A) is produced with a Ziegler-Natta catalyst, the Mw/Mn values are preferably in the range of from 3 to 8, preferably from 3.2 to 6.

When the polymer component (A) is produced with a metallocene catalyst, the Mw/Mn values are preferably in the range of from 2 to 3, preferably from 2.4 to 2.6.

The polymer component (A) exhibits a stereoregularity of the isotactic type. It is either a propylene homopolymer or a random copolymer of propylene with ethylene and/or alpha-olefins having 4-10 carbon atoms, such as copolymers and terpolymers of propylene. The polymer component (A) can also be a blend of the said polymers, in which case the mixing ratios are not critical. Preferably, the said alpha-olefin comonomer or comonomers are selected from the group consisting of ethylene, butene-1, pentene-1, hexene-1, heptene-1, octene-1, nonene-1, decene-1 and 4-methyl-1-pentene. The preferred amount of comonomer content is from 1% to 15% by weight, with respect to the total weight of the single copolymers present in (A), if any.

Ethylene and butene-1 are preferred comonomers.

The polymer component (A) can be produced by conventional processes by polymerizing propylene and, optionally, one or more alpha-olefins as mentioned above, in the presence of a polymerization catalyst, such as a stereospecific Ziegler-Natta catalysts or a metallocene catalyst.

The polymer component (A) obtained with a metallocene based catalyst is preferably obtained by using as metallocene compound a bridged benzoindenyl zirconium dichloride. Said compound is supported on silica and activated by using an alumoxane, preferably methylalumoxane, according to procedures known in the art. The polymer can be obtained with a process in slurry by using propylene monomer as diluent. An example of such kind of process and catalyst is found in the International patent application WO2005005495 A1.

The polymer component (A) obtained with a stereospecific Ziegler-Natta catalyst can be prepared in slurry as well by using propylene monomer as diluent. The stereospecific Ziegler-Natta catalysts comprise a solid catalyst component comprising at least one titanium compound having at least one titanium-halogen bond and at least an electron-donor compound (internal donor), both supported on a magnesium chloride compound. The Ziegler-Natta catalyst systems further comprise an organo-aluminum compound as essential co-catalyst and optionally an external electron-donor compound. Preferably, the internal electron-donor compound is selected from phthalates, 1,3-diethers and succinates. As mentioned above, it is preferable to carry out the polymerization process in liquid phase, using liquid propylene as the main diluent (bulk polymerization). Preferably, the bulk polymerization is carried out in one or more loop reactors which are connected in series.

From the above definitions it is clear that in component (B) the butene-1 copolymer or copolymers can comprise one or more comonomers selected from ethylene and higher alpha-olefins.

When the butene-1 polymer component (B) is a composition (II), such composition preferably comprises:

$B^I$) a butene-1 homopolymer or a copolymer of butene-1 with one or more comonomers selected from ethylene and higher alpha-olefins, having a copolymerized comonomer content ($C_A$) of up to 5% by mole, preferably up to 4% by mole;

$B^{II}$) a copolymer of butene-1 with one or more comonomers selected from ethylene and higher alpha-olefins, having a copolymerized comonomer content ($C_B$) of from 6% to 20% by mole, preferably from 8% to 18% by mole;

said composition having a content of fraction soluble in xylene at 0°C of 75% by weight or less, preferably of 70% by weight or less, determined on the total weight of $B^I$) and $B^{II}$).

Specific amounts of fraction soluble in xylene at 0°C for the butene-1 polymer composition (II) as provided herein, expressed as the weight content of fraction measured by extraction on the total weight of $B^I$) and $B^{II}$), are of from 35% to 75% by weight, or from 35% to 70% by weight, in particular from 40% to 70% by weight, or from 40% to 65% by weight.

When $B^I$) is a copolymer, a specific lower limit of comonomer content is of 1% by mole.

Preferably, when both $B^I$) and $B^{II}$) are copolymers, the difference between the percent values of the copolymerized comonomer contents of $B^I$) and $B^{II}$) satisfies the following relation:

$$C_{B}) - C_{A}) \geq 5;$$

or

$$C_{B}) - C_{A}) \geq 6.$$

The relative amounts of components $B^{I}$) and $B^{II}$) can be easily determined depending upon the desired value of total copolymerized comonomer content, the comonomer contents of the single components and their content of fraction soluble in xylene at 0 °C.

Preferred amounts are from 30% to 70% by weight, preferably from 35% to 65% by weight of $B^{I}$) and from 30% to 70% by weight, preferably from 35% to 65% by weight of $B^{II}$), all referred to the total weight of $B^{I}$) and $B^{II}$).

The specific MFRE values for components $B^{I}$) and $B^{II}$) can be broadly selected, provided that the said MFRE values of the overall composition are obtained.

In this respect, it is well known that the logarithm of the MFR value of polyolefin blends in general, thus of blends of butene-1 polymers as well, is given by the sum of the products of the weight fraction and the logarithm of the MFR value of the single components.

Thus the MFRE value of a composition made of a blend of the said components $B^{I}$) and $B^{II}$) is determined by the following relation:

$$\log MFRE (B^{I}+B^{II}) = wB^{I} \log MFRE (B^{I}) + wB^{II} \log MFRE (B^{II})$$

where MFRE ($B^{I}$+$B^{II}$) is the MFRE value for the blend of $B^{I}$) and $B^{II}$), MFRE ($B^{I}$) and MFRE ($B^{II}$) are the MFRE values of components $B^{I}$) and $B^{II}$) respectively and $wB^{I}$ and $wB^{II}$ are the respective weight fractions. For instance, $wB^{I}$ and $wB^{II}$ are both 0.5 when the blend is made of 50% by weight of $B^{I}$) and 50% by weight of $B^{II}$).

It is however preferred, in order to achieve good fluidity in the molten state, to keep the MFRE values of the single polymers $B^{I}$) and $B^{II}$) sufficiently high, in particular in the range of from 10 to 200 g/10 min., or from 15 to 150 g/10 min.

Specific examples of higher alpha-olefins that can be present as comonomers, in addition or in alternative to ethylene, in the butene-1 polymer component (B), are the alpha-olefins of formula $CH_2$ = CHR wherein R is methyl or an alkyl radical containing 3 to 8 or 3 to 6 carbon atoms, such as propylene, hexene-1, octene-1 .

However ethylene is the preferred comonomer.

The butene-1 polymer component (B) has a measurable crystallinity, as demonstrated by the presence, in the Differential Scanning Calorimetry (DSC) pattern, of the melting temperature peaks of crystalline butene-1 polymers.

In particular, the butene-1 polymer component (B) shows one or more melting peaks in the second DSC heating scan. Such temperature peak or peaks, generally occurring at temperatures equal to or lower than 100 °C, or equal to or lower than 85 °C, in particular from 40 °C to 100 °C, or from 40 °C to 85 °C, are attributed to the melting point of crystalline form II of the butene-1 polymers (TmII) and the area under the peak (or peaks) is taken as the global melting enthalpy (DH TmII). However, if more than one peak is present, the highest (most intense) one is taken as TmII.

Specific global DH TmII values for the butene-1 polymer component (B) are of 25 J/g or less, in particular of from 0.2 to 25 J/g, or from 0.2 to 20 J/g, or from 4 to 15 J/g, measured with a scanning speed corresponding to 10°C/min.

Moreover, the butene-1 polymer component (B) shows one or more melting peaks, generally occurring at temperatures equal to or lower than 100°C, or equal to or lower than 90°C, in particular from 30°C to 100°C, or from 30°C to 90°C, in a DSC heating scan carried out after aging. Such temperature peak or peaks are attributed to the melting point of crystalline form I of the butene-1 polymers (TmI) and the area under the peak (or peaks) is taken as the global melting enthalpy (DH TmI). However, if more than one peak is present, the highest (most intense) one is taken as TmI.

Specific global DH TmI values for the butene-1 polymer component (B) are of 50 J/g or less, in particular of from 25 to 50 J/g, or from 30 to 50 J/g, measured with a scanning speed corresponding to 10°C/min.

The butene-1 polymer component (B) can also have a detectable content of crystalline form III. Crystalline form III is detectable via the X-ray diffraction method described in the Journal of Polymer Science Part B: Polymer Letters Volume 1, Issue 11, pages 587-591, November 1963, or Macromolecules, Vol. 35, No. 7, 2002.

Specific X-ray crystallinity values for the butene-1 polymer component (B) are of from 10% to 50%, in particular from 15% to 45%.

Moreover, the butene-1 polymer component (B) preferably has at least one of the following further features:

- an intrinsic viscosity (IV) measured in tetrahydronaphthalene (THN) at 135°C equal to lower than 0.98 dl/g, or equal

to lower than 0.95 dl/g, in particular from 0.75 dl/g to 0.98 dl/g or from 0.75 dl/g to 0.95 dl/g;

- a Mw/Mn value from 1.5 to 4, in particular from 1.5 to 3.5, or from 1.5 to 2.5;
- Mw equal to or greater than 90,000 g/mol, in particular from 90,000 to 200,000 g/mol, or from 100,000 to 180,000 g/mol;
- a Mz value of 180,000 g/mol or higher, or of 190,000 g/mol or higher, in particular from 180,000 to 350,000 g/mol or from 190,000 to 300,000 g/mol;
- isotactic pentads (mmmm) measured with $^{13}C$-NMR operating at 150.91 MHz higher than 90%; in particular higher than 93% or higher than 95%;
- 4,1 insertions not detectable using a $^{13}C$-NMR operating at 150.91 MHz;
- a yellowness index lower than 0; in particular from 0 to -10 or from -1 to -9 or from -1 to -5;
- a Shore D value equal to or lower than 50, or equal to or lower than 45, in particular from 15 to 50 or from 15 to 45;
- a tensile stress at break, measured according to ISO 527, of from 10 MPa to 45 MPa, in particular from 15 MPa to 40 MPa;
- a tensile elongation at break, measured according to ISO 527, of from 400% to 1000%; in particular from 450% to 800%;
- a glass transition temperature of -18°C or less, in particular of -20°C or less, wherein the lower limit is -30°C;
- a density of 0.880 g/cm$^3$ or more, in particular of 0.885 g/cm$^3$ or more; wherein the upper limit is of 0.899 g/cm$^3$;
- a flexural modulus of from 80 to 250 MPa, or from 80 to 200 MPa, more preferably of from 100 to 250 MPa, or from 100 to 200 MPa, more in particular of from 115 to 250 MPa, or from 115 to 200 MPa.

The butene-1 polymer component (B) can be obtained by polymerizing the monomer(s) in the presence of a metallocene catalyst system obtainable by contacting:

- a stereorigid metallocene compound;
- an alumoxane or a compound capable of forming an alkyl metallocene cation; and, optionally,
- an organo aluminum compound.

Preferably the stereorigid metallocene compound belongs to the following formula (I):

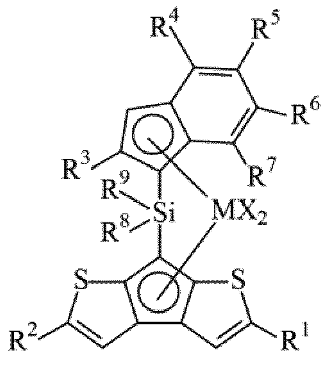

wherein:

M is an atom of a transition metal selected from those belonging to group 4; preferably M is zirconium;

X, equal to or different from each other, is a hydrogen atom, a halogen atom, a R, OR, OR'O, $OSO_2CF_3$, OCOR, SR, $NR_2$ or $PR_2$ group wherein R is a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radical, optionally containing heteroatoms belonging to groups 1 3-17 of the Periodic Table of the Elements; and R' is a $C_1$-$C_{20}$-alkylidene, $C_6$-$C_{20}$-arylidene, $C_7$-$C_{20}$-alkylarylidene, or $C_7$-$C_{20}$-arylalkylidene radical; preferably X is a hydrogen atom, a halogen atom, a OR'O or R group; more preferably X is chlorine or a methyl radical;

$R^1$, $R^2$, $R^5$, $R^6$, $R^7$, $R^8$ and $R^9$, equal to or different from each other, are hydrogen atoms, or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radicals, optionally containing heteroatoms belonging to groups 13-17 of the Periodic Table of the Elements; or $R^5$ and $R^6$, and/or $R^8$ and $R^9$ can optionally form a saturated or unsaturated, 5 or 6 membered rings, said ring can bear $C_1$-$C_{20}$ alkyl radicals as substituents; with the proviso that at least one of $R^6$ or $R^7$ is a linear or branched, saturated or unsaturated $C_1$-$C_{20}$-alkyl radical, optionally containing heteroatoms belonging to groups 13-17 of the Periodic Table of the Elements; preferably a $C_1$-$C_{10}$-alkyl radical;

$R^3$ and $R^4$, equal to or different from each other, are linear or branched, saturated or unsaturated $C_1$-$C_{20}$-alkyl radicals, optionally containing heteroatoms belonging to groups 13-17 of the Periodic Table of the Elements; preferably $R^3$ and $R^4$ equal to or different from each other are $C_1$-$C_{10}$-alkyl radicals; more preferably $R^3$ is a methyl, or ethyl radical; and $R^4$ is a methyl, ethyl or isopropyl radical.

Preferably the compounds of formula (I) have formula (Ia):

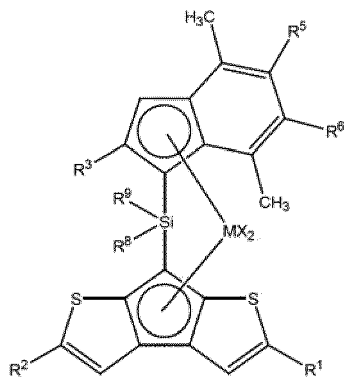

(Ia)

Wherein:

M, X, $R^1$, $R^2$, $R^5$, $R^6$, $R^8$ and $R^9$ have been described above;
$R^3$ is a linear or branched, saturated or unsaturated $C_1$-$C_{20}$-alkyl radical, optionally containing heteroatoms belonging to groups 13-17 of the Periodic Table of the Elements; preferably $R^3$ is a $C_1$-$C_{10}$-alkyl radical; more preferably $R^3$ is a methyl, or ethyl radical.

Specific examples of metallocene compounds are dimethylsilyl{(2,4,7-trimethyl-1-indenyl)-7-(2,5-dimethyl-cyclopenta[1,2-b:4,3-b']-dithiophene)} zirconium dichloride; dimethylsilanediyl{(1-(2,4,7-trimethylindenyl)-7-(2,5-dimethyl-cyclopenta[1,2-b:4,3-b']-dithiophene)}Zirconium dichloride and dimethylsilanediyl{(1-(2,4,7-trimethylindenyl)-7-(2,5-dimethyl-cyclopenta[1,2-b:4,3-b']-dithiophene)}zirconium dimethyl.

Examples of alumoxanes are methylatumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Bronsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms.

Examples organo aluminum compound are trimethylaluminum (TMA), triisobutylaluminium (TIBA), tris(2,4,4-trimethyl-pentyl)aluminum (TIOA), tris(2,3-dimethylbutyl)aluminium (TDMBA) and tris(2,3,3-trimethylbutyl)aluminum (TTMBA).

Examples of the said catalyst system and of polymerization processes employing such catalyst system can be found in WO2004099269 and WO2009000637.

By operating under known polymerization conditions in the presence of the above described catalysts, the present butene-1 polymer component (B) can be prepared directly in polymerization.

When the butene-1 polymer component (B) is a composition (II), in particular comprising the previously described butene-1 polymers $B^I$) and $B^{II}$), the single polymers can be prepared separately and then blended together in the molten state by using known polymer processing apparatuses, such as mono- and twin screw extruders.

However, the polymerization process can comprise at least two sequential stages, carried out in two or more reactors connected in series, wherein the polymers, in particular $B^I$) and $B^{II}$), are prepared in separate subsequent stages, operating in each stage, except for the first stage, in the presence of the polymer formed and the catalyst used in the preceding stage.

The polymerization process can be carried out in liquid phase, optionally in the presence of an inert hydrocarbon solvent, or in gas phase, using fluidized bed or mechanically agitated gas phase reactors.

When two or more polymerization stages are carried out, the catalyst can be added in the first reactor only, or

in more than one reactor.

The hydrocarbon solvent can be either aromatic (such as toluene) or aliphatic (such as propane, hexane, heptane, isobutane, cyclohexane and 2,2,4-trimethylpentane, isododecane).

Preferably, the polymerization process is carried out by using liquid butene-1 as polymerization medium. The polymerization temperature can be from 20°C to 150°C, in particular between 50°C and 90°C, for example from 65°C to 82°C.

The concentration of hydrogen in the liquid phase during the polymerization reaction (molar ppm $H_2$/ butene-1 monomer) is generally from 400 ppm to 950 ppm, in particular from 450 ppm to 900 ppm.

The amount of comonomer, in particular ethylene, in the liquid phase, when a copolymer is prepared, can be from 0.1% to 8% by weight, in particular from 0.2% to 6% by weight, with respect to the total weigh of comonomer and butene-1 monomer present in the polymerization reactor.

The present polyolefin composition can prepared as follows. The butene-1 polymer component (B) can be blended with the polymer component (A) in neat form or, preferably, as part of a concentrate, in which case component (B) is previously dispersed in a propylene polymer resin that can be same as or different from polymer component (A). The concentrate thus prepared is then blended with the polymer component (A).

The blending step can be carried out according to conventional methods, for example mixing polymer component (A), polymer component (B) or the concentrate thereof and well known additives in a blender, such as a Henschel or Banbury mixer, to uniformly disperse the said components, at a temperature equal to or higher than the polymer softening temperature, then extruding the composition and pelletizing.

However, in the case of fibres the said components (A) and (B) can be directly fed in the desired relative amounts to the apparatus used for preparing the fibres, preferably after mixing in the solid state, without a need for an extrusion step.

The polyolefin composition is usually added with additives and/or peroxides, whenever the latter are necessary to obtain the desired Melt Flow Rate.

The said additives comprise the common additives for olefin polymers, such as pigments, opacifiers, fillers, stabilizers, flame retardants, antacids and whiteners.

Fibres or filaments comprising the present polyolefin composition may be prepared using processes and apparatuses well known in the art, i.e. by melt-spinning the polyolefin composition in conventional devices suitable for producing single or composite fibres or filaments.

According to a further embodiment, the composite fibres or filaments may have a "skin-core structure".

By "fibres or filaments having a skin-core structure" is meant herein fibres or filaments having an axially extending interface and comprising at least two components, i.e. at least an inner core and at least an outer skin, said at least two components comprising different polymeric materials and being joined along the axially extending interface. In skin-core fibres or filaments, the skin thickness may be uniform or the skin thickness may not be uniform around the circumference of a fibre or filament cross-section.

Said fibres or filaments having skin-core structure can be produced using conventional melt-spin equipments having eccentric or concentric annular dies. The present polyolefin composition may be conveniently used for producing the outer skin of fibres or filaments having a skin-core structure. The inner core may comprise any polymeric material commonly used for spunbonding applications, depending on the desired end properties of the composite fibres or filaments. Preferably, the skin-core fibres or filaments comprise 50-80% by weight, more preferably 55-75% by weight, of polymeric material forming the core-layer and 20-50% by weight, more preferably 25-45% by weight, of polymer material comprising the present polyolefin composition, forming the outer skin-layer, with respect to the total weight of the fibres or filaments.

In alternative, the composite fibres or filaments can have a "side-by-side structure".

By "fibres or filaments having a side-by-side structure" is meant herein fibres or filaments wherein the said at least two fibre components are not arranged one inside the other, as in the skin-core structure, but rather in side-adjacent portions of the fibres or filaments.

In said composite fibres, the inner core, or, in the side-by-side structure, the fibre component or components not containing the present polyolefin composition, may be made of or comprise a propylene polymer selected from the same homopolymers or copolymers of component (A), equal to or different from the specific component (A) which is present in the skin or in the other fibre component or components containing the present polyolefin composition.

In some embodiments, the fibres may have a diameter of 10 to 50 micrometers.

Both the said fibres and articles produced with the fibres are produced according to known methods. In particular, the present fabric can be prepared with the well-known processes for the preparation of spun-bond non-woven fabrics, with which the fibres are spread to form directly a fibre web and calendered so as to obtain the non-woven fabric.

In a typical spunbonding process, the polymer is heated in an extruder to the melting point of the polyolefin composition and then the molten polyolefin composition is pumped under pressure through a spinneret containing a number of orifices of desired diameter, thereby producing filaments of the molten polymer composition and without

subjecting the filaments to a subsequent drawing.

The equipment is characterised by the fact that it includes an extruder with a die on its spinning head, a cooling tower an air suction gathering device that uses Venturi tubes.

Underneath this device that uses air speed to control the filaments speed, the filaments are usually gathered over a conveyor belt, where they are distributed forming a web according to well-known methods.

When using typical spunbonding machinery, it is usually convenient to apply the following process conditions:

- the output per hole ranges from 0.3-0.8 g/min, preferably from 0.4-0.6 g/min;
- the molten polymer filaments fed from the face of the spinneret are generally cooled by means of an air flow and are solidified as a result of cooling;
- the spinning temperature is generally between 200° and 300° C.

The filaments are then brought by the conveyor belt to the thermal bonding step, which is carried out by calendering through a couple of heated rolls.

When using the present fibres or filaments, the said high balance of mechanical properties is achieved with relatively low thermal bonding temperatures, preferably from 120°C to 170°C.

The fabric can be constituted by monolayer or multilayer non-woven fabrics. In a preferred embodiment, the non-woven fabric is multilayered and at least one layer comprises fibres formed from said polyolefin composition. The other layer may be obtained by spinning processes other than spunbonding and may comprise other types of polymers.

In an embodiment, the non-woven fabric has a density of 10 to 120 grams per square meter, preferably from 20 to 110, more preferably from 30 to 100 grams per square meter.

Tenacity and elongation at break of the non-woven fabric may range from 10 to 200 N/cm and from 25% to 150% respectively.

## EXAMPLES

Various embodiments, compositions and methods as provided herein are disclosed below in the following examples. These examples are illustrative only, and are not intended to limit the scope of the invention.

The following analytical methods are used to characterize the polymer compositions and the non-woven fabric.

### Thermal properties (melting temperatures and enthalpies)

Determined by Differential Scanning Calorimetry (D.S.C.) on a Perkin Elmer DSC-7 instrument, as hereinafter described.

- For the determination of TmII (the melting temperature measured in the second heating run) a weighted sample (5-10 mg) obtained from the polymerization was sealed into aluminum pans and heated at 200 °C with a scanning speed corresponding to 10 °C/minute. The sample was kept at 200 °C for 5 minutes to allow a complete melting of all the crystallites thus cancelling the thermal history of the sample. Successively, after cooling to -20 °C with a scanning speed corresponding to 10 °C/minute, the peak temperature was taken as the crystallization temperature (Tc). After standing for 5 minutes at -20 °C, the sample was heated for the second time at 200 °C with a scanning speed corresponding to 10 °C/min. In this second heating run, the peak temperature measured was taken as (TmII). If more than one peak was present, the highest (most intense) one was taken as TmII. The area under the peak (or peaks) was taken as global melting enthalpy (DH TmII).
- The melting enthalpy and the melting temperature were also measured after aging (without cancelling the thermal history) as follows by using Differential Scanning Calorimetry (D.S.C.) on an Perkin Elmer DSC-7 instrument. A weighted sample (5-10 mg) obtained from the polymerization was sealed into aluminum pans and heated at 200°C with a scanning speed corresponding to 10 °C/minute. The sample was kept at 200 °C for 5 minutes to allow a complete melting of all the crystallites. The sample was then stored for 10 days at room temperature. After 10 days the sample was subjected to DSC, cooled to -20 °C, and then it was heated at 200°C with a scanning speed corresponding to 10°C/min. In this heating run, the peak temperature was taken as the melting temperature (Tml). If more than one peak was present, the highest (most intense) peak was taken as Tml. The area under the peak (or peaks) was taken as global melting enthalpy after 10 days (DH Tml).

### MFR

Determined according to norm ISO 1133-2:2011 with a load of 2.16 kg at 190 °C (standard die) for MFRE and with a load of 2.16 kg at 230 °C for MFRL.

Intrinsic viscosity

Determined according to norm ASTM D 2857 - 16 in tetrahydronaphthalene at 135 °C.

Density

The density of samples was measured according to ISO 1183-1:2012 at 23°C (ISO 1183-1 method A "Methods for determining the density of non-cellular plastics -Part 1: Immersion method, liquid pyknometer method and titration method"; Method A: Immersion method, for solid plastics (except for powders) in void-free form). Test specimens were taken from compression moulded plaques conditioned for 10 days before carrying out the density measure.

Comonomer contents

Comonomer contents were determined via FT-IR.
The spectrum of a pressed film of the polymer was recorded in absorbance vs. wavenumbers ($cm^{-1}$). The following measurements were used to calculate the ethylene content:

a) area (Aa) of the combination absorption bands between 4482 and 3950 $cm^{-1}$ which is used for spectrometric normalization of film thickness.
b) factor of subtraction ($FCR_{C2}$) of the digital subtraction between the spectrum of the polymer sample and the absorption band due to the sequences BEE and BEB (B: l,butene units, E: ethylene units) of the methylenic groups ($CH_2$ rocking vibration).
c) Area ($A_{C2,block}$) of the residual band after subtraction of the $C_2$PB spectrum. It comes from the sequences EEE of the methylenic groups ($CH_2$ rocking vibration).

APPARATUS

A Fourier Transform Infrared spectrometer (FTIR) was used, which is capable of providing the spectroscopic measurements above reported.
A hydraulic press with platens heatable to 200 °C (Carver or equivalent) was used.

METHOD

Calibration of (BEB + BEE) sequences

A calibration straight line is obtained by plotting %(BEB + BEE)wt vs. $FCR_{C2}/A_t$. The slope $G_r$ and the intercept $I_r$ are calculated from a linear regression.

Calibration of EEE sequences

A calibration straight line is obtained by plotting %(EEE)wt vs. $A_{C2,block}/A_t$. The slope $G_H$ and the intercept $I_H$ are calculated from a linear regression.

Sample preparation

Using a hydraulic press, a thick sheet is obtained by pressing about g 1.5 of sample between two aluminum foils. If homogeneity is in question, a minimum of two pressing operations are recommended. A small portion is cut from this sheet to mold a film. Recommended film thickness ranges between 0.1-0.3 mm.
The pressing temperature is 140 $\pm$ 10 °C.
A crystalline phase modification takes place with time, therefore it is recommended to collect the IR spectrum of the sample film as soon as it is molded.

Procedure

The instrument data acquisition parameters are as follows:

Purge time: 30 seconds minimum.
Collect time: 3 minutes minimum.

Apodization: Happ-Genzel.
Resolution: 2 $cm^{-1}$.
Collect the IR spectrum of the sample vs. an air background.

CALCULATION

Calculate the concentration by weight of the BEE + BEB sequences of ethylene units:

$$\%(BEE + BEB)wt = G_r \cdot \frac{FCR_{C2}}{A_t} + I_r$$

Calculate the residual area (AC2, block) after the subtraction described above, using a baseline between the shoulders of the residual band.

Calculate the concentration by weight of the EEE sequences of ethylene units:

$$\%(EEE)wt = G_H \cdot \frac{A_{C2,\,block}}{A_t} + I_H$$

Calculate the total amount of ethylene percent by weight:

$$\%C2wt = \left[\%(BEE + BEB)wt + \%(EEE)wt\right]$$

<u>NMR analysis of chain structure</u>

$^{13}C$ NMR spectra were acquired on a Bruker AV-600 spectrometer equipped with cryo-probe, operating at 150.91 MHz in the Fourier transform mode at 120°C.

The peak of the $T_{\beta\delta}$ carbon (nomenclature according to C. J. Carman, R. A. Harrington and C. E. Wilkes, Macromolecules, 10, 3, 536 (1977)) was used as internal reference at 37.24 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove $^{1}H$-$^{13}C$ coupling. About 512 transients were stored in 32K data points using a spectral window of 9000 Hz.

The assignments of the spectra, the evaluation of triad distribution and the composition were made according to Kakugo [M. Kakugo, Y. Naito, K. Mizunuma and T. Miyatake, Macromolecules, 16, 4, 1160 (1982)] and Randall [J. C. Randall, Macromol. Chem Phys., C30, 211 (1989)] using the following:

$$BBB = 100\ (T_{\beta\beta})/S = I5$$

$$BBE = 100T_{\beta\delta}/S = I4$$

$$EBE = 100\ P_{\delta\delta}\ /S = I14$$

$$BEB = 100\ S_{\beta\beta}/S = I13$$

$$BEE = 100\ S_{\alpha\delta}/S = I7$$

$$EEE = 100(0.25\ S_{\gamma\delta} + 0.5\ S_{\delta\delta})/S = 0.25\ I9 + 0.5I10$$

| Area | Chemical Shift | Assignments | Sequence |
|---|---|---|---|
| 1 | 40.40-40.14 | Sαα | BBBB |
| 2 | 39.64 | Tδδ | EBE |
| | 39-76-39.52 | Sαα | BBBE |
| 3 | 39.09 | Sαα | EBBE |
| 4 | 37.27 | Tβδ | BBE |
| 5 | 35.20-34.88 | Tββ | BBB |
| 6 | 34.88-34.49 | Say | BBEB+BEBE |
| 7 | 34.49-34.00 | Sαδ | EBEE+BBEE |
| 8 | 30.91 | Sγγ | BEEB |
| 9 | 30.42 | Sγδ | BEEE |
| 10 | 29.90 | Sδδ | EEE |
| 11 | 27.73-26.84 | Sβδ+$2B_2$ | BBB+BBE EBEE+BBEE |
| 12 | 26.70 | $2B_2$ | EBE |
| 13 | 24.54-24.24 | Sββ | BEB |
| 14 | 11.22 | Pδδ | EBE |
| 15 | 11.05 | Pβδ | BBE |
| 16 | 10.81 | Pββ | BBB |

To a first approximation, the *mmmm* was calculated using 2B2 carbons as follows:

| Area | Chemical shift | assignments |
|---|---|---|
| B1 | 28.2 -27.45 | *mmmm* |
| B2 | 27.45 - 26.30 | |
| *mmmm* = $B_1$*100/($B_1$+$B_2$-2*$A_4$-$A_7$-$A_{14}$) | | |

Mw/Mn and Mz determination by GPC

Measured by way of Gel Permeation Chromatography (GPC) in 1,2,4-trichlorobenzene (TCB). Molecular weight parameters (Mn, Mw, Mz) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were 300 × 7.5 mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the *K* values were $K_{PS} = 1.21 \times 10^4$ dL/g and $K_{PB} = 1.78 \times 10^{-4}$ dL/g for PS and polybutene (PB) respectively, while the Mark-Houwink exponents $\alpha = 0.706$ for PS and $\alpha = 0.725$ for PB were used.

For butene/ethylene copolymers, as far as the data evaluation is concerned, it was assumed for each sample that the composition was constant in the whole range of molecular weight and the K value of the Mark-Houwink relationship was calculated using a linear combination as reported below:

$$K_{EB} = x_E K_{PE} + x_B K_{PB}$$

where $K_{EB}$ is the constant of the copolymer, $K_{PE}$ ($4.06 \times 10^{-4}$, dL/g) and $K_{PB}$ ($1.78 \times 10^{-4}$ dL/g) are the constants of polyethylene (PE) and PB, $x_E$ and $x_B$ are the ethylene and the butene weight relative amount with $x_E + x_B = 1$. The Mark-Houwink exponents $\alpha = 0.725$ was used for all the butene/ethylene copolymers independently on their composition. End processing data treatment was fixed for all samples to include fractions up at 1000 in terms of molecular weight equivalent. Fractions below 1000 were investigated via GC.

Fractions soluble and insoluble in xylene at 0°C (XS-0°C)

2.5 g of polymer composition and 250 $cm^3$ of o-xylene are introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then cooled to 100°C in air for 10 to 15 minute under stirring and then kept for 30 minutes in thermostatic water bath at 0 °C for 60 minutes as well. The so formed solid is filtered on quick filtering paper at 0°C. 100 $cm^3$ of the filtered liquid is poured in a previously weighed aluminum container which is heated on a heating plate under nitrogen flow, to remove the solvent by evaporation. Thus, one calculates the percent by weight of polymer soluble (Xylene Solubles at 0°C = XS 0°C) from the average weight of the residues. The insoluble fraction in o-xylene at 0°C (xylene Insolubles at 0°C = XI%0°C) is:

$$XI\%0°C=100-XS\%0°C.$$

Fractions soluble and insoluble in o-xylene at 25°C (XS-25°C)

2.5 g of polymer are dissolved in 250 ml of xylene, at 135 °C, under agitation. After 20 minutes, the solution is cooled to 25 °C under stirring, and then it is allowed to settle for 30 minutes. The precipitate is filtered with filter paper; the solution is evaporated under a nitrogen current, and the residue dried under vacuum at 80 °C until constant weight. Thus, one calculates the percent by weight of polymer soluble (Xylene Soluble at 25°C = XS 25°C) from the residue. The insoluble fraction in o-xylene at 0°C (Xylene Insoluble at 25°C = XI 25°C) is:

$$XI\%25°C = 100- XS\%25°C$$

The percent by weight of polymer insoluble in xylene at ambient temperature (25°C) is considered the isotactic index of the polymer. This value corresponds substantially to the isotactic index determined by extraction with boiling n-heptane, which by definition constitutes the isotactic index of polypropylene.

Determination of X-ray crystallinity

The X-ray crystallinity was measured with an X-ray Diffraction Powder Diffractometer (XDPD) that uses the Cu-K$\alpha$1 radiation with fixed slits and able to collect spectra between diffraction angle 2$\Theta$ = 5° and 2$\Theta$ = 35° with step of 0.1° every 6 seconds.
The samples are diskettes of about 1.5-2.5 mm of thickness and 2.5-4.0 cm of diameter made by compression moulding. The diskettes are aged at room temperature (23°C) for 96 hours.
After this preparation the specimen is inserted in the XDPD sample holder. The XRPD instrument set in order to collect the XRPD spectrum of the sample from diffraction angle 2$\Theta$ = 5° to 2$\Theta$ = 35° with steps of 0.1° by using counting time of 6 seconds, and at the end the final spectrum is collected.
Defining Ta as the total area between the spectrum profile and the baseline expressed in counts/sec·2$\Theta$ and Aa as the total amorphous area expressed in counts/sec·2$\Theta$. Ca is total crystalline area expressed in counts/sec·2$\Theta$.
The spectrum or diffraction pattern is analyzed in the following steps:

1) define a suitable linear baseline for the whole spectrum and calculate the total area (Ta) between the spectrum profile and the baseline;
2) define a suitable amorphous profile, along the whole spectrum, that separate , the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca =

Ta- Aa
5) Calculate the degree of crystallinity (%Cr) of the sample using the formula:

$$\%Cr = 100 \times Ca / Ta$$

Flexural Modulus

According to norm ISO 178:2010, measured 10 days after molding.

Shore D

According to norm ISO 868:2003, measured 10 days after molding.

Tensile stress and elongation at break

According to norm ISO 527-1:2012 on compression molded plaques, measured 10 days after molding.
Glass transition temperature via DMTA (Dynamic Mechanical Thermal Analysis) Molded specimens of 76 mm by 13 mm by 1 mm are fixed to the DMTA machine for tensile stress. The frequency of the tension and relies of the sample is fixed at 1 Hz. The DMTA translates the elastic response of the specimen starting from -100 °C to 130 °C. In this way it is possible to plot the elastic response versus temperature. The elastic modulus for a viscoelastic material is defined as E=E'+iE". The DMTA can split the two components E' and E" by their resonance and plot E' vs temperature and E'/E" = tan (δ) vs temperature.
The glass transition temperature Tg is assumed to be the temperature at the maximum of the curve E'/E" = tan (δ) vs temperature.

Yellowness index

Determined accordingly to ASTM D1925.

Tenacity and Elongation at break of non-woven fabrics

Test pieces 50 mm large and about 100 mm long are obtained by cutting the non-woven fabrics, with the longer side in the Machine Direction (MD), corresponding to the direction of movement of the spun-bond conveyor belt, or in the Transverse Direction (TD), perpendicular to the Machine direction. The two opposite 50 mm sides of the sample are fixed to the clamps of an Instron dinamometer (model 1122) and tensioned to break with a traction speed of 100 mm/min, the initial distance between the clamps being of 100 mm. The ultimate strength (load at break) and the elongation at break are determined. The ultimate strength, divided by 50 mm, is taken as the tenacity of the sample.
Both tenacity and elongation are measured in MD and TD, using the respectively cut test pieces.

Polymer Components used in the Examples and Comparative Examples

Component (A)

As polymer component (A), an isotactic propylene homopolymer was used, having a MFRL of 25 g/10 min., a density of 0.9 g/cm$^3$ and an isotactic index, measured as percentage by weight of fraction insoluble in xylene at 25°C, of 97.

Component (B)

As polymer component (B), a composition (II) was used, containing 42% by weight of $B^{I}$) and 58% by weight of $B^{II}$) and prepared as follows.

Preparation of the metallocene catalyst (A-1)

Dimethylsilyl {(2,4,7-trimethyl-1-indenyl)-7-(2,5-dimethyl-cyclopenta[1,2-b:4,3-b']-dithiophene)} zirconium dichloride (A-1) was prepared according to Example 32 of WO0147939.

Preparation of the catalytic solution

Under nitrogen atmosphere, 8.1 L of a solution of 4.5 %wt/v of TIBA in isododecane (1.84 mol of TIBA) and 760 mL of a solution 30 %wt/wt of MAO in toluene (3.65 moles of MAO) were loaded in a 20 L jacketed glass reactor equipped with an anchor stirrer and allowed to react at room temperature for about 1 hour under stirring.
After this time, the metallocene A-1 (1.6 g, 2.75 mmol) was added and dissolved under stirring for about 30 minutes.
The final solution was discharged from the reactor into a cylinder through a filter to remove solid residues (if any).
The composition of the solution is as follows:

| Al g/L | Zr %w | Al/Zr mol ratio | Metallocene Conc. mg/L |
|---|---|---|---|
| 16.7 | 0.028 | 1996 | 181. |

Polymerization

The polymerization was carried out continuously in a pilot plant comprising two stirred reactors connected in series in which liquid butene-1 constituted the liquid medium.
The catalytic solution was fed in both reactors.
The polymerization conditions are reported in Table 1.

Table 1

| | Composition (II) |
|---|---|
| Operative conditions (first reactor) | |
| Temperature (°C) | 75 |
| $H_2$ in liquid phase (ppm mol) | 704 |
| $C_2H_4$ in liquid phase (weight%) | 0.4 |
| Mileage (kg/gMe) | 3035 |
| Split (weight%) | 42 |
| $C_2H_4$ content of $B^I$) (weight%) | 0.9 |
| $C_2H_4$ content of $B^I$) (mole%) | 1.8 |
| | |
| Operative conditions (second reactor) | |
| Temperature (°C) | 75 |
| $H_2$ in liquid phase (ppm mol) | 690 |
| $C_2H_4$ in liquid phase (weight%) | 3.5 |
| Split (weight%) | 58 |
| $C_2H_4$ content of $B^{II}$) (weight%) | 6.3 |
| $C_2H_4$ content of $B^{II}$) (mole%) | 11.9 |
| | |
| Total mileage | 2797 |
| Total $C_2H_4$ content (mole%) | 7.6 |
| Note: $C_2H_4$ = ethylene; kg/gMe = kilograms of polymer per gram of metallocene catalyst (A-1); Split = amount of polymer produced in the concerned reactor. | |

In Table 2 the properties of the final composition (II) are specified.

Table 2

| | | Composition (II) |
|---|---|---|
| MFR 190° 2.16Kg | g/10min | 37 |
| Intrinsic Viscosity | dl/g | 0.91 |
| $C_2H_4$ IR | mol % | 7.6 |
| TmII | °C | 82.1 |
| DH TmII | J/g | 7.7 |
| TmI | °C | 87.5 |
| DH TmI | J/g | 40.7 |
| X - Ray crystallinity | % | 34 |
| Xylene Soluble at 0°C | % | 60 |
| Mw | g/mol | 145805 |
| Mn | g/mol | 65056 |
| Mw/Mn | | 2.2 |
| Mz | g/mol | 253556 |
| Density | g/cm$^3$ | 0.896 |
| Flexural Modulus | MPa | 124 |
| Strength at Break | MPa | 25 |
| Elongation at Break | % | 630 |
| Hardness Shore D | D | 36.1 |
| Glass transition temperature | °C | -24.1 |

Examples 1-6 and Comparative Examples 1-4: Preparation of the non-woven fabrics

Non-woven fabrics made of concentric skin-core composite filaments were prepared.

In Examples 1-8, the skin was made of a polyolefin composition obtained by mechanically blending, in the solid state, components (A) and (B) in the relative amounts reported in Tables 3 and 4.

In Comparative Examples 1-4, the skin was made of component (A) only.

In all the examples, the core was made of component (A) only.

The polymer materials, namely the polyolefin composition comprising components (A) and (B), or the component (A) only, for the filament skin, and component (A) for the filament core, were fed to a Reicofil 4 spunbond pilot line, which was run with the following settings and operative conditions:

- core/skin 70/30 (whole diameter : 0.6 mm);
- line speed (m/min) : 214 (17 gsm*) - 73 (50 gsm);
- spinneret: 7377 holes (6827 holes/m);
- gap pre-diffusor (exit): 23 mm;
- secondary air gap - right/left: 14 mm;
- gap diffusor exit: 75 mm;
- distance above the belt right/left: 131 mm.

* gsm = grams per square meter.

The thermal bonding was carried out with the hot rolls at the temperatures reported in Table 3.

Thus, non-woven fabrics made of composite filaments with concentric core and skin structure in a weight ratio of 70% of core and 30% of skin, with a density of 17 or 50 grams per square meter (gsm).

The mechanical properties of the non-woven fabrics are reported in Tables 3 and 4 as well.

Table 3

| Example | | Ex. 1 | Ex. 2 | Ex. 3 | Ex. 4 |
|---|---|---|---|---|---|
| Skin composition: amount of (A) | [% by weight] | 90 | 90 | 70 | 70 |
| Skin composition: amount of (B) | [% by weight] | 10 | 10 | 30 | 30 |
| gsm | [g/m$^2$] | 17 | 17 | 17 | 17 |
| Thermal bonding temperature | [°C] | 130 | 140 | 130 | 140 |
| | | | | | |
| Non-woven properties | | | | | |
| Tenacity MD | [N/5 cm] | 27.27 | 40.68 | 38.17 | 39.73 |
| Tenacity TD | [N/5 cm] | 13.39 | 22.61 | 23.35 | 26.17 |
| Elongation MD | [%] | 35 | 55 | 66 | 70 |
| Elongation TD | [%] | 44 | 61 | 78 | 79 |
| Note: MD = Machine Direction; TD = Transverse Direction | | | | | |
| Example | | Comp. Ex.1 | Comp. Ex.2 | | |
| Skin composition: amount of (A) | [% by weight] | 100 | 100 | | |
| Skin composition: amount of (B) | [% by weight] | 0 | 0 | | |
| gsm | [g/m$^2$] | 17 | 17 | | |
| Thermal bonding temperature | [°C] | 130 | 140 | | |
| | | | | | |
| Non-woven properties | | | | | |
| Tenacity MD | [N/5 cm] | 19.08 | 34.12 | | |
| Tenacity TD | [N/5 cm] | 10.31 | 15.57 | | |
| Elongation MD | [%] | 19 | 38 | | |
| Elongation TD | [%] | 28 | 39 | | |
| Note: Comp. = Comparative | | | | | |

Table 4

| Example | | Ex. 5 | Ex. 6 | Comp.Ex. 3 | Comp.Ex. 4 |
|---|---|---|---|---|---|
| Skin composition: amount of (A) | [% by weight] | 90 | 90 | 100 | 100 |
| Skin composition: amount of (B) | [% by weight] | 10 | 10 | 0 | 0 |
| gsm | [g/m$^2$] | 50 | 50 | 50 | 50 |
| Thermal bonding temperature | [°C] | 153 | 163 | 153 | 163 |
| | | | | | |
| Non-woven properties | | | | | |
| Tcnacity MD | [N/5 cm] | 137.97 | 156.55 | 101.4 | 141.4 |
| Tenacity TD | [N/5 cm] | 91.98 | 101 | 60.84 | 90.9 |
| Elongation MD | [%] | 110.7 | 126.9 | 66.0 | 97.1 |
| Elongation TD | [%] | 111.7 | 120.2 | 63.3 | 104.9 |

## Claims

1. A polyolefin composition comprising:

   A) 60-95% by weight of a propylene homo-polymer with an isotactic index, measured as percentage by weight of fraction insoluble xylene at 25°C, higher than 80, or of a crystalline co-polymer of propylene with ethylene and/or one or more alpha-olefins having 4-10 carbon atoms, containing 85% by weight or more of propylene and having an isotactic index equal to or higher than 80, or of a blend thereof;
   B) 5-40% by weight of a copolymer (I) of butene-1 with one or more comonomers selected from ethylene and higher alpha-olefins, or a composition (II) of butene-1 polymers comprising at least one copolymer of butene-1 with one or more of said comonomers, said copolymer (I) or composition (II) having:

   - a MFRE value of from 5 to 100 g/10 min., wherein MFRE is the Melt Flow Rate, measured according to ISO 1133 at 190°C with a load of 2.16 kg (condition E);
   - a copolymerized comonomer content from 4% to 15% by mole, referred to the total weight of B);
   - a Mw/Mn value, where Mw is the weight average molar mass and Mn is the number average molar mass, both measured by GPC, equal to or lower than 4;
   - flexural modulus of 80 MPa or higher;

   wherein the amounts of A) and B) are referred to the total weight of A) + B).

2. The polyolefin composition of claim 1, wherein component B) is a composition (II) comprising:

   $B^{I}$) a butene-1 homopolymer or a copolymer of butene-1 with one or more comonomers selected from ethylene and higher alpha-olefins, having a copolymerized comonomer content ($C_A$) of up to 5% by mole;
   $B^{II}$) a copolymer of butene-1 with one or more comonomers selected from ethylene and higher alpha-olefins, having a copolymerized comonomer content ($C_B$) of from 6% to 20% by mole;

   said composition having a content of fraction soluble in xylene at 0°C of 75% by weight or less, determined on the total weight of $B^{I}$) and $B^{II}$).

3. Fibres comprising the polyolefin composition according to anyone of the preceding claims.

4. Fibres according to claim 3, having a skin-core structure or side-by-side structure.

5. Skin-core fibres according to claim 4, containing the polyolefin composition of claim 1 or 2 in the skin component.

6. Skin-core fibres according to claim 5, each comprising 50-80% by weight, of polymeric material forming the core-layer and 20-50% by weight of polymer material comprising the composition of claim 1 or 2, forming the outer skin-layer, with respect to the total weight of the fibre.

7. Skin-core fibres according to claim 6, wherein the core-layer comprises a propylene polymer selected from the same homopolymers or copolymers of component (A), equal to or different from the specific component (A) which is present in the skin.

8. Non-woven fabrics comprising the fibres according to claims 3 to 7.

9. Non-woven fabrics according to claim 8, having a density of 10 to 120 grams per square meter.

## Patentansprüche

1. Polyolefinzusammensetzung, umfassend:

   A) 60 bis 95 Gew.% eines Propylenhomopolymers mit einem isotaktischen Index, gemessen als Gewichtsprozentsatz der Xylol bei 25 °C unlöslichen Fraktion, höher als 80 oder eines kristallinen Copolymers von Propylen mit Ethylen und/oder einem oder mehreren alpha-Olefinen mit 4 bis 10 Kohlenstoffatomen, das 85 Gew.% oder mehr an Propylen enthält und einen isotaktischen Index gleich oder größer als 80 hat, oder eines Gemisches

davon;
B) 5 bis 40 Gew.% eines Copolymers (I) von Buten-1 mit einem oder mehreren Comonomeren ausgewählt aus Ethylen und höheren alpha-Olefinen oder einer Zusammensetzung (II) aus Buten-1-polymeren, umfassend mindestens ein Copolymer von Buten-1 mit einem oder mehreren der Comonomere, wobei das Copolymer (1) oder die Zusammensetzung (II) aufweist:

- einen MFRE-Wert von 5 bis 100 g/10 min., wobei MFRE die Schmelzflussrate ist, gemessen gemäß ISO 1133 bei 190 °C mit einer Last von 2,16 kg (Bedingung E);
- einen Gehalt an copolymerisiertem Comonomer von 4 Mol.% bis 15 Mol.%, bezogen auf das Gesamtgewicht von B);
- einen Wert für Mw/Mn gleich oder kleiner als 4, wobei Mw das durchschnittliche Molekulargewicht (Gewichtsmittel) ist und Mn das durchschnittliche Molekulargewicht (Zahlenmittel) ist und beide mittels GPC gemessen werden;
- einen Biegemodul von 80 MPa oder höher;

wobei die Mengen von A) und B) sich auf das Gesamtgewicht von A) + B) beziehen.

**2.** Polyolefinzusammensetzung nach Anspruch 1, wobei Komponente B) eine Zusammensetzung (II) ist, umfassend:

$B^I$) ein Buten-1-Homopolymer oder ein Copolymer von Buten-1 mit einem oder mehreren Comonomeren ausgewählt aus Ethylen und höheren alpha-Olefinen, das einen Gehalt an copolymerisiertem Comonomer ($C_A$) von bis zu 5 Mol.% aufweist;
$B^{II}$) ein Copolymer von Buten-1 mit einem oder mehreren Comonomeren ausgewählt aus Ethylen und höheren alpha-Olefinen, das einen Gehalt an copolymerisiertem Comonomer ($C_B$) von 6 Mol.% bis 20 Mol.% aufweist;

wobei die Zusammensetzung einen Gehalt einer in Xylol bei 0 °C löslichen Fraktion von 75 Gew.% oder weniger hat, bestimmt bezogen auf das Gesamtgewicht von $B^I$) und $B^{II}$).

**3.** Fasern, umfassend die Polyolefinzusammensetzung nach einem der vorhergehenden Ansprüche.

**4.** Fasern nach Anspruch 3 mit einer Mantel-Kern-Struktur oder Seite-an-Seite-Struktur.

**5.** Mantel-Kern-Fasern nach Anspruch 4, die die Polyolefinzusammensetzung nach Anspruch 1 oder 2 in der Mantelkomponente enthalten.

**6.** Mantel-Kern-Fasern nach Anspruch 5, die jeweils 50 bis 80 Gew.% polymeres Material, welches die Kernschicht bildet, und 20 bis 50 Gew.% Polymermaterial umfassen, welches die Zusammensetzung nach Anspruch 1 oder 2 umfasst, die die äußere Mantelschicht bildet, bezogen auf das Gesamtgewicht der Faser.

**7.** Mantel-Kern-Fasern nach Anspruch 6, wobei die Kernschicht ein Propylenpolymer ausgewählt aus den gleichen Homopolymeren oder Copolymeren von Komponente (A) umfasst, welches das gleiche wie die spezifische Komponente A), die in dem Mantel vorhanden ist, oder davon verschieden ist.

**8.** Vliestextilien, umfassend die Fasern gemäß den Ansprüchen 3 bis 7.

**9.** Vliestextilien nach Anspruch 8 mit einer Dichte von 10 bis 120 Gramm pro Quadratmeter.

## Revendications

**1.** Composition polyoléfinique comprenant :

A) 60-95 % en poids d'un homopolymère de propylène présentant un indice isotactique, mesuré en tant que pourcentage en poids de fraction insoluble le xylène à 25 °C, supérieur à 80, ou d'un copolymère cristallin de propylène avec de l'éthylène et/ou une ou de plusieurs alpha-oléfines comprenant 4-10 atomes de carbone, contenant 85 % en poids ou plus de propylène et présentant un indice isotactique supérieur ou égal à 80 ou d'un mélange de ceux-ci ;
B) 5 à 40 % en poids d'un copolymère (I) de butène-1 avec un ou plusieurs comonomères choisis parmi l'éthylène

et les alpha-oléfines supérieures ou d'une composition (II) de polymères de butène-1 comprenant au moins un copolymère de butène-1 avec un ou plusieurs desdits comonomères, ledit copolymère (I) ou ladite composition (II) présentant :

- une valeur MFRE de 5 à 100 g/10 min, MFRE étant l'indice de fluidité à chaud, mesuré selon la norme ISO 1133 à 190 °C sous une charge de 2,16 kg (condition E) ;
- une teneur en comonomère copolymérisé de 4 % à 15 % en mole, par rapport au poids total de B) ;
- une valeur Mw/Mn, Mw étant la masse molaire moyenne en poids et Mn étant la masse molaire moyenne en nombre, toutes deux mesurées par CPG, égale ou inférieure à 4;
- un module d'élasticité en flexion de 80 MPa ou plus ;

les quantités de A) et B) se rapportant au poids total de A) + B).

**2.** Composition polyoléfinique selon la revendication 1, le constituant B) étant une composition (II) comprenant :

$B^{I}$) un homopolymère de butène-1 ou un copolymère de butène-1 avec un ou plusieurs comonomères choisis parmi l'éthylène et les alpha-oléfines supérieures, présentant une teneur en comonomères copolymérisés ($C_A$) de jusqu'à 5 % en moles ;
$B^{II}$) un copolymère de butène-1 avec un ou plusieurs comonomères choisis parmi l'éthylène et les alpha-oléfines supérieures, présentant une teneur en comonomères copolymérisés ($C_B$) de 6 % à 20 % en moles ;

ladite composition présentant une teneur en fraction soluble dans le xylène à 0 °C de 75 % en poids ou moins, déterminée sur le poids total de $B^{I}$) et $B^{II}$).

**3.** Fibres comprenant la composition polyoléfinique selon l'une quelconque des revendications précédentes.

**4.** Fibres selon la revendication 3, présentant une structure peau-noyau ou une structure côte à côte.

**5.** Fibres à structure peau-noyau selon la revendication 4, contenant la composition polyoléfinique selon la revendication 1 ou 2 dans le composant de peau.

**6.** Fibres à structure peau-noyau selon la revendication 5, comprenant chacune 50 à 80 % en poids de matériau polymère formant la couche de noyau et 20 à 50 % en poids de matériau polymère comprenant la composition selon la revendication 1 ou 2, formant la couche de peau externe, par rapport au poids total de la fibre.

**7.** Fibres à structure peau-noyau selon la revendication 6, la couche de noyau comprenant un polymère de propylène choisi parmi les mêmes homopolymères ou copolymères que ceux du constituant (A), identique au constituant spécifique (A) qui est présent dans la peau ou différent de celui-ci.

**8.** Tissus non tissés comprenant les fibres selon les revendications 3 à 7.

**9.** Tissus non tissés selon la revendication 8, présentant une densité de 10 à 120 grammes par mètre carré.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010069775 A
- WO 2005005495 A1
- WO 2004099269 A
- WO 2009000637 A
- WO 0147939 A


### Non-patent literature cited in the description


- *Journal of Polymer Science Part B: Polymer Letters,* November 1963, vol. 1 (11), 587-591
- *Macromolecules,* 2002, vol. 35 (7
- **C. J. CARMAN ; R. A. HARRINGTON ; C. E. WILKES.** *Macromolecules,* 1977, vol. 10 (3), 536
- **M. KAKUGO ; Y. NAITO ; K. MIZUNUMA ; T. MIYATAKE.** *Macromolecules,* 1982, vol. 16 (4), 1160
- **J. C. RANDALL.** *Macromol. Chem Phys.,* 1989, vol. C30, 211